(19) Europäisches Patentamt
European Patent Office
Office européen des brevets

(11) **EP 3 060 397 B1**

(12) **FASCICULE DE BREVET EUROPEEN**

(45) Date de publication et mention
de la délivrance du brevet:
**22.07.2020 Bulletin 2020/30**

(21) Numéro de dépôt: **14805976.9**

(22) Date de dépôt: **22.10.2014**

(51) Int Cl.:
*B32B 17/10* (2006.01)   *B60J 1/00* (2006.01)
*B60J 1/02* (2006.01)   *C03C 27/12* (2006.01)

(86) Numéro de dépôt international:
**PCT/FR2014/052685**

(87) Numéro de publication internationale:
**WO 2015/059407 (30.04.2015 Gazette 2015/17)**

(54) **VERRE FEUILLETE MINCE POUR PARE-BRISE**

DÜNNE VERBUNDGLASSCHEIBE FÜR WINDSCHUTZSCHEIBEN

THIN LAMINATED GLASS FOR WINDSCREEN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.10.2013 FR 1360326**

(43) Date de publication de la demande:
**31.08.2016 Bulletin 2016/35**

(73) Titulaire: **SAINT-GOBAIN GLASS FRANCE
92400 Courbevoie (FR)**

(72) Inventeurs:
• **LESTRINGANT, Claire
F-75020 Paris (FR)**
• **GY, René
F-93140 Bondy (FR)**
• **KREMERS, Stephan
52525 Heinsberg (DE)**

(74) Mandataire: **Saint-Gobain Recherche
Département Propriété Industrielle
39 Quai Lucien Lefranc
93300 Aubervilliers (FR)**

(56) Documents cités:
EP-A1- 0 884 289    EP-A1- 2 409 834
WO-A1-2012/137742    WO-A1-2012/177426
GB-A- 2 078 169

**Description**

La présente invention a pour objet un vitrage feuilleté constitué d'au moins deux feuilles de verre minces. Elle concerne plus particulièrement un vitrage feuilleté pour une utilisation dans le domaine de l'automobile, notamment en tant que pare-brise.

Les vitrages feuilletés sont couramment utilisés dans le domaine de l'automobile, de l'aéronautique ou du bâtiment, puisqu'ils présentent l'avantage d'être des vitrages dits de « sécurité ». Ils sont constitués d'au moins deux feuilles de verre liées entre elles par une couche intercalaire en matière plastique, généralement en polyvinyl butyral (PVB). De façon classique, les vitrages utilisés pour les pare-brise sont asymétriques et sont constitués de deux feuilles de verre silico-sodo-calcique, d'épaisseurs différentes, la feuille externe étant généralement plus épaisse que la feuille interne. Pour améliorer la résistance mécanique de ce type de vitrage, il est connu de renforcer les feuilles de verre constitutives en réalisant des trempes et ainsi en créant une zone superficielle en compression et une zone centrale en tension. Le brevet US 3,558,415 décrit un vitrage feuilleté bombé dans lequel les feuilles de verre externe et interne ont été trempées chimiquement de façon à avoir une zone superficielle en compression. Le brevet GB 1,339,980 décrit un vitrage pour pare-brise dans lequel seule la feuille de verre externe est trempée chimiquement.

Une problématique régulièrement rencontrée dans le domaine de l'automobile est relative au poids des vitrages. Les pare-brise fabriqués actuellement ont typiquement une feuille externe d'une épaisseur comprise entre 2,1 et 2,6 mm et une feuille interne d'une épaisseur comprise entre 1,6 et 2,1 mm. On cherche actuellement à réduire le poids des vitrages, sans pour autant compromettre les propriétés de résistance mécanique. Les demandes de brevet WO 2012/051038 et WO 2012/177426 décrivent des verres feuilletés dans lesquels les feuilles de verre ont une épaisseur inférieure à 2 mm et au moins une des feuilles de verre est trempée chimiquement. La réduction de l'épaisseur des feuilles de verre constitutives du pare-brise permet une diminution de son poids mais peut entrainer des problèmes mécaniques, notamment une augmentation de sa fragilité lorsqu'il est exposé à des projections de gravillons. La solution proposée par les documents cités ci-dessus pour améliorer la résistance mécanique consiste à tremper chimiquement la feuille de verre externe. Le procédé de trempe chimique, ou d'échange ionique, consiste à substituer en surface un ion de la feuille de verre (généralement un ion alcalin tel que le sodium) par un ion de rayon ionique plus grand (généralement un autre ion alcalin tel que le potassium) et à créer des contraintes résiduelles de compression en surface de la feuille, jusqu'à une certaine profondeur. Il s'agit d'un procédé relativement couteux et long et par conséquent difficilement compatible avec un procédé industriel en continu.

Une étape de bombage des feuilles de verre est indispensable pour les applications recherchées. Le bombage permet de donner une courbe aux feuilles de verre et ainsi de faciliter l'assemblage des différentes feuilles constituant le vitrage feuilleté. De nombreux procédés de bombage peuvent être utilisés. On citera par exemple le bombage par gravité, le bombage par défilement entre des rouleaux de convoyage, le bombage par pressage contre une forme pleine, réalisé soit à l'aide d'un cadre, soit par aspiration. Le bombage simultané des feuilles de verre sur squelette par gravité et/ou partiellement par pressage (comme décrit dans les demandes EP0448447, WO2004/087590, WO02/064519 ou WO2006/072721) sont des techniques employées pour bomber simultanément les deux feuilles de verre destinées à former un vitrage feuilleté bombé tel un pare-brise de véhicule de transport. Les deux feuilles de verre posées l'une sur l'autre sont supportées le long de leurs parties d'extrémités marginales d'une façon sensiblement horizontale par un cadre ayant le profil désiré, c'est-à-dire le profil correspondant à celui définitif des deux feuilles de verre bombées. Ainsi supportées, les deux feuilles de verre passent dans un four de bombage, généralement un four ayant des zones de températures différentes. Lorsque les deux feuilles de verre sont de composition chimique différente, leur comportement pendant cette étape de bombage peut être différent, et le risque d'apparition de défauts ou de contraintes résiduelles est par conséquent augmenté. Une solution proposée lorsque les propriétés physico-chimiques et les épaisseurs des feuilles de verre sont différentes est décrite dans la demande de brevet GB 2078169 et consiste à inverser l'ordre des feuilles de verre pendant le procédé de bombage par rapport à l'ordre qu'ont ces mêmes feuilles pendant la phase d'assemblage.

Il serait utile, pour des raisons de qualité optique des produits, de coût, de poids et de simplification de la technologie, de pouvoir disposer d'un verre feuilleté mince présentant une résistance mécanique compatible avec les applications recherchées, et qui soit constitué de feuilles de verre qui puissent être bombées simultanément, sans avoir besoin de modifier l'ordre des feuilles de verre entre l'étape de bombage et l'étape d'assemblage. Le bombage simultané et l'assemblage direct, sans inversion des feuilles, est d'autant plus intéressant que les feuilles constitutives du vitrage sont de faible épaisseur.

C'est dans ce cadre que s'inscrit la présente invention qui a pour objet un vitrage feuilleté selon la revendication 1.

La température Tp1 qui correspond à la moyenne des températures définies ci-dessus pour la feuille externe est, selon l'invention, supérieure à la température Tp2, correspondant à la moyenne des températures définies ci-dessus de la feuille interne.

La température Tp1 est supérieure à la température Tp2, de sorte que la différence $\Delta$Tp entre les températures Tp1 et Tp2 est positive.

La différence ΔTp est donc comprise entre 0 et 80°C.

Dans la présente invention, le terme « externe » est utilisé pour tout ce qui est relatif à l'extérieur du dispositif accueillant le vitrage. La feuille de verre externe est par conséquent celle qui est positionnée vers l'extérieur de l'habitacle. Le terme « interne » est par opposition utilisé pour ce qui est relatif à l'intérieur du dispositif accueillant le vitrage. Une feuille interne d'un vitrage feuilleté correspond à la feuille qui est placée vers l'intérieur de l'habitacle.

Les inventeurs ont mis en évidence qu'il était possible de réaliser un vitrage feuilleté d'une épaisseur totale inférieure à 4,5 mm, voire à 4 mm, avec deux feuilles de verre de composition chimique différente et qui puissent être bombées simultanément, puis assemblées directement, sans inversion de l'ordre des feuilles de verre. Ainsi, le produit est obtenu sans avoir besoin de réaliser le bombage de chacune des deux feuilles séparément, malgré leur composition chimique différente. Il conserve une résistance mécanique satisfaisante pour une utilisation en tant que pare-brise pour automobile. Une conséquence importante pour le produit final est notamment son allègement, entraînant un allègement du véhicule et une moindre consommation. Un assemblage asymétrique, en épaisseur et en composition chimique, combinant une feuille de verre extérieur et une feuille de verre intérieur très mince permet avantageusement d'obtenir des pare-brise résistants et allégés.

Chaque feuille de verre, en fonction de sa composition est caractérisée par sa température supérieure de recuisson (ou« annealing temperature » en anglais) et sa température de ramollissement (encore appelée « température de Littleton »).

La température de recuisson correspond à la température pour laquelle la viscosité du verre est assez forte pour que la disparition des contraintes puisse s'effectuer totalement en un temps déterminé (temps de relaxation des contraintes d'environ 15 minutes). On parle parfois de « température de relaxation des contraintes ». Cette température correspond au moment où la viscosité du liquide $\eta$ vaut $10^{13}$ Poises ($10^{12}$ Pa.s). Les mesures de cette température sont effectuées classiquement selon la norme NF B30-105.

La température de ramollissement est définie comme étant la température à laquelle un fil de verre de diamètre d'environ 0,7 mm environ et de longueur 23,5 cm s'allonge de 1mm/min, sous son propre poids (norme Iso 7884-6). La viscosité correspondante vaut $10^{7,6}$ Poises ($10^{6,6}$ Pa.s).

La température Tp est définie de la façon suivante :

$$Tp = (T_{ramolissement} + T_{recuisson})/2$$

Chaque feuille de verre est caractérisée, en fonction de sa composition, par une température Tp. Le vitrage feuilleté selon la présente invention doit être composé de deux feuilles de verre dont les températures Tp sont les plus proches possible, pour répondre à l'exigence souhaitée d'un bombage simultané. Pour des applications dans le domaine de l'automobile et notamment en tant que pare-prise, il est important de s'assurer que le procédé de fabrication du vitrage feuilleté, notamment les étapes de bombage ou formage ne fait pas apparaître des défauts dans le vitrage.

Le vitrage feuilleté selon la présente invention présente l'avantage de pouvoir être bombé sans augmenter le risque de création de contraintes résiduelles ou défauts optiques. Les deux feuilles de verre constitutives du vitrage ont une composition chimique différente mais sont telles qu'il est possible de les bomber ensemble sans complexifier le procédé en raison de la différence de composition chimique des deux feuilles de verre, et notamment sans avoir besoin d'effectuer une inversion sur l'ordre des feuilles de verres entre l'étape de bombage et l'étape d'assemblage.

La feuille de verre externe a une épaisseur d'au plus 2,1 mm, de préférence d'au plus 1,6 mm. Ainsi, cette épaisseur relativement faible de la feuille externe contribue également à l'allègement du vitrage feuilleté. Le vitrage feuilleté selon la présente invention possède une bonne résistance mécanique et une bonne durabilité du vitrage après endommagement par projection de gravillons. Les risques de casse lors de l'application de gradients thermiques après sur des vitrages fragilisés, notamment par exemple pendant le dégivrage du pare-brise sont ainsi réduits.

La composition chimique de la feuille externe est différente de celle de la feuille de verre interne. Le verre feuilleté selon la présente invention a une feuille de verre externe en "verre spécial" dont la composition est choisie parmi les compositions données ci-dessous.

Les compositions de verre ci-après ne mentionnent que les constituants essentiels. Elles ne donnent pas les éléments mineurs de la composition, comme les agents affinants classiquement utilisés tels que les oxydes d'arsenic, d'antimoine, d'étain, de cérium, les halogènes ou les sulfures métalliques ou les agents colorants, tels que les oxydes de fer notamment, l'oxyde de cobalt, de chrome, de cuivre, de vanadium, de nickel et le sélénium qui sont la plupart du temps nécessaires pour les applications de verre en vitrage automobile.

Selon un mode de réalisation, la feuille de verre externe a une composition chimique du type borosilicate. La feuille de verre externe peut être telle que sa composition chimique comprend les oxydes suivants dans les gammes de teneurs pondérales définies ci-après :

| $SiO_2$ | 75-85%, |
|---|---|
| $Al_2O_3$ | 2-3%, |
| $B_2O_3$ | 10-15%, |
| $Na_2O+K_2O$ | 3-7 %. |

Selon un autre mode de réalisation, la feuille de verre externe peut également être du type aluminosilicate de sodium et telle que sa composition chimique comprend les oxydes suivants dans les gammes de teneurs pondérales définies ci-après :

| $SiO_2$ | 55-71%, |
|---|---|
| $Al_2O_3$ | 2-15%, de préférence 4-15% |
| $Na_2O$ | 9-18% |
| $MgO$ | 2-11% |
| $K_2O$ | 1-15% |
| $B_2O_3$ | 0-5%, |
| $CaO$ | 0-5% |
| $SnO_2$ | 0-5% |

Ce type de verre est par exemple décrit dans le brevet EP-B-0914298.

Le vitrage feuilleté est asymétrique en épaisseur : l'épaisseur de la feuille de verre externe est supérieure à la feuille de verre interne.

Selon un mode de réalisation, la feuille de verre externe est une feuille de verre non renforcée.

Au sens de la présente invention, sous le terme « non renforcée », on entend que la feuille n'est ni renforcée chimiquement, ni renforcée thermiquement, avant bombage. N'étant pas renforcée chimiquement, les feuilles ne contiennent normalement pas une surconcentration d'un oxyde alcalin tel que Na ou K en surface par rapport au cœur. Néanmoins, certaines contraintes, avantageusement en compression peuvent apparaître dans le verre et résulter de l'assemblage avec l'intercalaire polymère.

Il est toutefois possible, si l'utilisateur le souhaite et si le verre le permet, de renforcer chimiquement les feuilles de verre par trempe.

La feuille interne du vitrage feuilleté a une épaisseur d'au plus 1,5 mm. Préférentiellement, cette feuille a une épaisseur d'au plus 1,1 mm, voire est inférieure à 1 mm. Avantageusement, la feuille de verre interne a une épaisseur inférieure ou égale à 0,7 mm. L'épaisseur de la feuille de verre est d'au moins 50 $\mu$m.

La feuille de verre interne a une composition chimique de type silico-sodo-calcique.

De façon classique, la feuille de verre interne est un verre de composition silico-sodo-calcique tel qu'il comprend les oxydes suivants dans les gammes pondérales définies ci-après :

| $SiO_2$ | 65-75%, |
|---|---|
| $Na_2O$ | 10-20% |
| $CaO$ | 5-15%, |
| $Al_2O_3$ | 0-5%, |
| $K_2O$ | 0-5 % |
| $MgO$ | 0-5%. |

Pour des raisons de coût, il est en effet plus avantageux de fabriquer un vitrage feuilleté avec une seule feuille de verre spécial. De façon avantageuse, la coloration et/ou la fonctionnalité du vitrage feuilleté sont apportées par l'intermédiaire de la feuille de verre interne. Pour cela, on peut choisir une feuille de verre interne présentant des fonctions optiques et/ou énergétiques, par exemple en utilisant une feuille de verre interne teintée.

L'intercalaire polymérique peut être constitué d'une ou de plusieurs couches de matériau thermoplastique. Il peut notamment être en polyuréthane, en polycarbonate, en polyvinylbutyral (PVB), en polyméthacrylate de méthyle (PMMA), en éthylène vinyl acétate (EVA) ou en résine ionomère. L'intercalaire polymèrique peut se présenter sous la forme d'un film multicouche, possédant des fonctionnalités particulières comme par exemple de meilleures propriétés acoustiques, des propriétés anti UV....

L'épaisseur de l'intercalaire polymérique est comprise entre 50 $\mu$m et 4 mm. Généralement, l'épaisseur de l'intercalaire est inférieure à 1 mm. Dans les vitrages automobiles, l'épaisseur de l'intercalaire polymérique est de façon classique de 0,76 mm.

Lorsque les feuilles de verre sont très minces et ont une épaisseur inférieure à 1 mm, il peut être avantageux d'utiliser une feuille polymérique d'une épaisseur supérieure à 1 mm, voire supérieure à 2 ou 3 mm pour conférer de la rigidité au vitrage, sans entraîner un alourdissement trop important de la structure.

Classiquement, l'intercalaire comprend au moins une couche de polyvinyl butyral (ou PVB).

Le vitrage feuilleté selon la présente invention constitue avantageusement un vitrage pour automobile et notamment un pare-brise. Les feuilles constitutives du vitrage feuilleté sont bombées ensemble avant d'être assemblées avec l'intercalaire polymérique pour former le produit fini.

Les exemples ci-dessous illustrent l'invention sans en limiter la portée.

Le tableau ci-après décrit des compositions chimiques de 5 verres différents.

- composition C1 : verre clair classique de type silico-sodocalcique
- composition C2 : verre de type de type borosilicate
- composition C3 : verre de type aluminosilicate de sodium
- composition C4 : verre de type aluminosilicate renforcé chimiquement, selon l'art antérieur (tel que décrit dans la demande WO 2012/177426)
- composition C5 : verre de type borosilicate sans alcalin

Tableau 1 : Composition des verres utilisés

| % poids | C1 | C2 | C3 | C4 | C5 |
|---|---|---|---|---|---|
| $SiO_2$ | 71,1 | 80,6 | 60,7 | 61,9 | 63,6 |
| $Al_2O_3$ | 0,65 | 2,3 | 7,7 | 16,6 | 16 |
| $B_2O_3$ | | 13 | | 13,5 | 10,7 |
| $Na_2O$ | 13,8 | 3,4 | 13,1 | 2,9 | |
| $K_2O$ | 0,25 | 0,6 | 9,55 | | |
| $Li_2O$ | | | | | |
| CaO | 8,75 | | | | 7,8 |
| MgO | 4 | | 8,4 | 3,4 | 0,1 |
| ZnO | | | | | 0,7 |

Les températures Tp des verres de composition C1 à C5 sont données dans le tableau 2.

Tableau 2 : température Tp pour chaque composition décrite dans le tableau 1

| | $Tp = (T_{recuisson} + T_{ramollissement})/2$ (°C) |
|---|---|
| C1 | (545+725)/2 = 635 |
| C2 | (560+821)/2 = 690 |
| C3 | (540+740)/2 = 640 |
| C4 | (609+843)/2 = 726 |
| C5 | (722+971)/2 = 846 |

Un vitrage feuilleté conforme à la présente invention est fabriqué en utilisant une feuille de verre externe de composition C3 d'une épaisseur de 1,6 mm, un intercalaire en PVB d'une épaisseur de 0,76 mm et une feuille de verre interne de composition C1 d'une épaisseur de 0,55 mm. La différence de température Tp de ces deux feuilles de verre est de 5°C : ces deux feuilles sont bombées simultanément.

La feuille de verre de composition C3 est particulièrement apte à être renforcée chimiquement par trempe. L'assemblage d'une feuille de verre de composition chimique C3 renforcée chimiquement avec une feuille de verre interne en verre silico-sodo calcique mince permet d'obtenir un vitrage feuilleté de faible épaisseur, de bonne résistance mécanique et dont les deux feuilles de verre peuvent être bombées simultanément.

A titre de comparaison, on prépare un vitrage feuilleté en assemblant une feuille de verre externe de composition C4 d'une épaisseur de 1 mm, avec un intercalaire en PVB de 0,76 mm et une feuille de verre interne de composition C1. D'un point de vue mécanique, les tests en résistance sont acceptables, le verre externe étant renforcé chimiquement. En revanche la différence de température Tp entre ces deux feuilles de verre est de 91°C : les deux feuilles de verre ne peuvent pas être bombées simultanément.

Afin de comparer la résistance de différents vitrages feuilletés aux projections de gravillons, un test dit « test Sarbacane » est réalisé. Ce test consiste à lâcher une pointe Vickers en diamant lestée (poids de 3,2 g) sur la face externe d'une plaque de vitrage feuilleté d'une taille de 200x200mm, maintenue dans un cadre souple en caoutchouc à partir de différentes hauteurs (de 100 à 2 000 mm). Le cadre souple permet au vitrage feuilleté de se déformer pendant l'impact de la pointe. On mesure ainsi la hauteur de chute jusqu'à ce qu'une fissure en forme d'étoile soit visible par inspection au microscope, ou dont la dimension maximale dépasse 10 mm, après impact sur la feuille de verre externe (profondeur d'impact comprise entre 100 et 150 $\mu$m). On incrémente la hauteur de 100 mm entre chaque lâché de la pointe et la première hauteur à laquelle la fissure est observée est notée. Chaque vitrage feuilleté est testé à 9 points d'impact différents. La valeur de la hauteur de chute donnée dans les exemples ci-après correspond à la moyenne des 9 valeurs de hauteur de casse. La détection de la fissure a lieu immédiatement après la chute de la pointe Vickers.

Un vitrage feuilleté comprenant une feuille de verre externe de composition C2 d'une épaisseur de 1,1 mm, un intercalaire en PVB de 0,76 mm et une feuille de verre interne de composition C1 et d'épaisseur 0,55 mm est assemblé. Le test Sarbacane est effectué sur ce vitrage feuilleté : la hauteur de chute moyenne mesurée est de 1918 mm. A titre de comparaison, le même test effectué sur un vitrage feuilleté constitué de deux feuilles de verre de composition C1 d'épaisseur respectives de 1,1 mm pour la feuille externe et de 0,55 mm pour la feuille interne, conduit à une hauteur de chute moyenne mesurée de 989 mm. La résistance mécanique du vitrage feuilleté selon la présente invention est satisfaisante pour les applications recherchées. D'autre part, la différence de température Tp des deux feuilles de verre est de 55°C : les deux feuilles de verre sont bombées simultanément.

Un vitrage feuilleté comprenant une feuille de verre externe de composition C5 d'une épaisseur de 0,7 mm, un intercalaire en PVB de 0,76 mm et une feuille de verre interne de composition C1 et d'épaisseur 0,7 mm est assemblé. Le test Sarbacane est effectué sur ce vitrage feuilleté : la hauteur de chute moyenne mesurée est de 1960 mm. A titre de comparaison, le même test effectué sur un vitrage feuilleté constitué de deux feuilles de verre de composition C1 d'épaisseur respectives de 0,7 mm pour la feuille externe et de 0,7 mm pour la feuille interne, conduit à une hauteur de chute moyenne mesurée de 633 mm. La résistance mécanique du vitrage feuilleté est satisfaisante pour les applications recherchées. Toutefois, la différence de température Tp des deux feuilles de verre est de 211°C : les deux feuilles de verre ne peuvent pas être bombées simultanément. La résistance mécanique de cet assemblage répond aux critères recherchés, toutefois, en raison des compositions chimiques différentes des deux feuilles de verre et d'un comportement visqueux également très différent, il n'est pas possible de bomber ces deux feuilles ensemble.

## Revendications

**1.** Vitrage feuilleté comprenant au moins une feuille de verre externe, une feuille de verre interne et un intercalaire polymérique situé entre les deux feuilles de verre, dans lequel
la feuille interne a une épaisseur d'au plus 1,5 mm
la feuille de verre externe, dont l'épaisseur est supérieure à celle de la feuille de verre interne, est une feuille de verre de composition chimique différente de la feuille interne, la composition chimique de la feuille externe étant du type borosilicate ou aluminosilicate de sodium et la composition chimique de la feuille interne étant du type silico-sodo-calcique,
la différence entre les températures Tp1 et Tp2 étant inférieure à 80°C
la température Tp1 étant définie comme la moyenne entre la température supérieure de recuisson et la température de ramollissement de la feuille de verre externe et la température Tp2 étant définie comme la moyenne entre la température supérieure de recuisson et la température de ramollissement de la feuille de verre interne, la formule générale définissant la température Tp étant

$$Tp = (T_{ramolissement} + T_{recuisson})/2$$

la température supérieure de recuisson correspondant à la température à laquelle la viscosité du verre vaut $10^{13}$ Poises ($10^{12}$ Pa.s) et la température de ramollissement correspondant à la température à laquelle la viscosité du verre vaut $10^{7,6}$ Poises ($10^{6,6}$ Pa.s).

**2.** Vitrage selon la revendication précédente **caractérisé en ce que** la différence entre les températures Tp1 et Tp2 est inférieure à 70°C, de préférence inférieure à 60°C.

3. Vitrage selon l'une des revendications précédentes **caractérisé en ce que** la différence entre les températures Tp1 et Tp2 est positive.

4. Vitrage selon l'une des revendications précédentes **caractérisé en ce que** la feuille de verre externe a une épaisseur d'au plus 2,1 mm, de préférence d'au plus 1,6 mm.

5. Vitrage selon l'une des revendications 1 à 4 **caractérisé en ce que** l'intercalaire polymérique comprend une ou de plusieurs couches de matériau thermoplastique, choisi parmi le polyuréthane, le polycarbonate, le polyvinylbutyral (PVB), le polyméthacrylate de méthyle (PMMA), l'éthylène vinyl acétate (EVA) ou une résine ionomère.

6. Vitrage selon la revendication précédente **caractérisé en ce qu'**il comprend au moins une couche en polyvinyl butyral.

7. Vitrage selon l'une des revendications 1 à 6 **caractérisé en ce que** la feuille de verre externe est telle que sa composition chimique comprend les oxydes suivants dans les gammes de teneurs pondérales définies ci-après :

| | |
|---|---|
| $SiO_2$ | 75-85%, |
| $Al_2O_3$ | 2-3%, |
| $B_2O_3$ | 10-15%, |
| $Na_2O+K_2O$ | 3-7 %. |

8. Vitrage selon l'une des revendications 1 à 6 **caractérisé en ce que** la feuille de verre externe telle que sa composition chimique comprend les oxydes suivants dans les gammes de teneurs pondérales définies ci-après :

| | |
|---|---|
| $SiO_2$ | 55-71%, |
| $Al_2O_3$ | 2-15%, de préférence 4-15% |
| $Na_2O$ | 9-18% |
| $MgO$ | 2-11% |
| $K_2O$ | 1-15% |
| $B_2O_3$ | 0-5%, |
| $CaO$ | 0-5% |
| $SnO_2$ | 0-5% |

9. Vitrage selon l'une des revendications 1 à 8 **caractérisé en ce que** la feuille de verre interne a une épaisseur d'au plus 1,1 mm, et préférentiellement inférieure à 1 mm.

10. Vitrage selon la revendication précédente, dans lequel la feuille de verre interne a une épaisseur inférieure ou égale à 0,7 mm.

11. Vitrage selon l'une des revendications précédentes, dans lequel la feuille de verre externe est une feuille de verre non renforcée.

12. Vitrage selon l'une des revendications précédentes, dans lequel la feuille de verre interne est teintée.

13. Vitrage selon l'une des revendications précédentes, dans lequel l'épaisseur de l'intercalaire polymérique est comprise entre 50 $\mu$m et 4 mm.

14. Vitrage selon l'une des revendications précédentes **caractérisé en ce qu'**il constitue un vitrage pour automobile, notamment un pare-brise.

**Patentansprüche**

1. Verbundverglasung, umfassend mindestens eine äußere Glasscheibe, eine innere Glasscheibe und eine zwischen den zwei Glasscheiben angeordnete Polymer-Zwischenlage, wobei

   die innere Glasscheibe eine Stärke von höchstens 1,5 mm aufweist

   die äußere Glasscheibe, deren Stärke größer ist als die der inneren Glasscheibe, eine Glasscheibe mit einer chemischen Zusammensetzung ist, die sich von der inneren Scheibe unterscheidet, wobei die chemische Zusammensetzung der äußeren Scheibe vom Typ Borosilikat oder Natriumaluminosilikat ist und die chemische Zusammensetzung der inneren Scheibe vom Typ Silicium-Soda-Kalk ist,

   die Differenz zwischen den Temperaturen Tp1 und Tp2 weniger als 80 °C beträgt die Temperatur Tp1 als der Durchschnitt zwischen der oberen Glühtemperatur und der Erweichungstemperatur der äußeren Glasscheibe definiert ist und die Temperatur Tp2 als der Durchschnitt zwischen der oberen Glühtemperatur und der Erweichungstemperatur der inneren Glasscheibe definiert ist, wobei die allgemeine Formel, die die Temperatur Tp definiert, ist

$$Tp = (T_{Erweichung} + T_{Glühung})/2$$

   die obere Glühtemperatur der Temperatur entspricht, bei der die Viskosität des Glases $10^{13}$ Poise ($10^{12}$ Pa.s) beträgt, und die Erweichungstemperatur der Temperatur entspricht, bei der die Viskosität des Glases $10^{7,6}$ Poise ($10^{6,6}$ Pa.s) beträgt.

2. Verglasung nach vorhergehendem Anspruch, **dadurch gekennzeichnet, dass** die Differenz zwischen den Temperaturen Tp1 und Tp2 weniger als 70 °C, vorzugsweise weniger als 60 °C beträgt.

3. Verglasung nach einem der vorhergehenden Ansprüche, **dadurch gekennzeichnet, dass** die Differenz zwischen den Temperaturen Tp1 und Tp2 positiv ist.

4. Verglasung nach einem der vorhergehenden Ansprüche, **dadurch gekennzeichnet, dass** die äußere Glasscheibe eine Stärke von höchstens 2,1 mm, vorzugsweise von höchstens 1,6 mm aufweist.

5. Verglasung nach einem der Ansprüche 1 bis 4, **dadurch gekennzeichnet, dass** die Polymer-Zwischenlage eine oder mehrere Schichten aus thermoplastischem Material umfasst, ausgewählt aus Polyurethan, Polycarbonat, Polyvinylbutyral (PVB), Polymethylmethacrylat (PMMA), Ethylenvinylacetat (EVA) oder einem ionomeren Harz.

6. Verglasung nach dem vorhergehenden Anspruch, **dadurch gekennzeichnet, dass** sie mindestens eine Schicht aus Polyvinylbutyral umfasst.

7. Verglasung nach einem der Ansprüche 1 bis 6, **dadurch gekennzeichnet, dass** die äußere Glasscheibe derart ist, dass ihre chemische Zusammensetzung die folgenden Oxide in den nachfolgend definierten Gewichtsanteilsbereichen umfasst:

   | | |
   |---|---|
   | $SiO_2$ | 75-85 %, |
   | $Al_2O_3$ | 2-3 %, |
   | $B_2O_3$ | 10-15 %, |
   | $Na_2O+K_2O$ | 3-7 %. |

8. Verglasung nach einem der Ansprüche 1 bis 6, **dadurch gekennzeichnet, dass** die äußere Glasscheibe derart ist, dass ihre chemische Zusammensetzung die folgenden Oxide in den nachfolgend definierten Gewichtsanteilsbereichen umfasst:

   | | |
   |---|---|
   | $SiO_2$ | 55-71 %, |
   | $Al_2O_3$ | 2-15 %, vorzugsweise 4-15 % |
   | $Na_2O$ | 9-18 % |
   | $MgO$ | 2-11 % |

(fortgesetzt)

| | |
|---|---|
| $K_2O$ | 1-15 % |
| $B_2O_3$ | 0-5 %, |
| CaO | 0-5 % |
| $SnO_2$ | 0-5 % |

9. Verglasung nach einem der Ansprüche 1 bis 8, **dadurch gekennzeichnet, dass** die innere Glasscheibe eine Stärke von höchstens 1,1 mm und vorzugsweise von weniger als 1 mm aufweist.

10. Verglasung nach vorhergehendem Anspruch, wobei die innere Glasscheibe eine Stärke von weniger als oder gleich 0,7 mm aufweist.

11. Verglasung nach einem der vorhergehenden Ansprüche, wobei die äußere Glasscheibe eine unverstärkte Glasscheibe ist.

12. Verglasung nach einem der vorhergehenden Ansprüche, wobei die innere Glasscheibe getönt ist.

13. Verglasung nach einem der vorhergehenden Ansprüche, **dadurch gekennzeichnet, dass** die Stärke der Polymer-Zwischenlage zwischen 50 $\mu$m und 4 mm liegt.

14. Verglasung nach einem der vorhergehenden Ansprüche, **dadurch gekennzeichnet, dass** sie eine Verglasung für ein Kraftfahrzeug, insbesondere eine Windschutzscheibe, darstellt.

**Claims**

1. A laminated glazing comprising at least one outer glass sheet, an inner glass sheet and a polymeric insert located between the two glass sheets, in which
   the inner sheet has a thickness of not more than 1.5 mm,
   the outer glass sheet, the thickness of which is greater than the thickness of the inner glass sheet, is a glass sheet of different chemical composition from that of the inner sheet, the outer glass sheet having a chemical composition of borosilicate or sodium aluminosilicate type and the inner sheet having a composition of silicon-sodium-calcium type,
   the difference between the temperatures Tp1 and Tp2 being less than 80°C,
   the temperature Tp1 being defined as the average between the upper annealing temperature and the softening point of the outer glass sheet and the temperature Tp2 being defined as the average between the upper annealing temperature and the softening point of the inner glass sheet, the general formula defining the temperature Tp being

$$Tp = (T_{softening} + T_{annealing})/2$$

the upper annealing temperature corresponding to the temperature at which the viscosity of the glass is $10^{13}$ poises ($10^{12}$ Pa.s) and the softening point corresponding to the temperature at which the viscosity of the glass is $10^{7.6}$ poises ($10^{6.6}$ Pa.s).

2. The glazing as claimed in the preceding claim, **characterized in that** the difference between the temperatures Tp1 and Tp2 is less than 70°C and preferably less than 60°C.

3. The glazing as claimed in either of the preceding claims, **characterized in that** the difference between the temperatures Tp1 and Tp2 is positive.

4. The glazing as claimed in one of the preceding claims, **characterized in that** the outer glass sheet has a thickness of not more than 2.1 mm and preferably not more than 1.6 mm.

5. The glazing as claimed in one of claims 1 to 4, **characterized in that** the polymeric insert comprises one or more layers of thermoplastic chosen from polyurethane, polycarbonate, polyvinyl butyral (PVB), polymethyl methacrylate (PMMA) and ethylene-vinyl acetate (EVA) or an ionomeric resin.

6. The glazing as claimed in the preceding claim, **characterized in that** it comprises at least one layer made of polyvinyl butyral.

7. The glazing as claimed in one of claims 1 to 6, **characterized in that** the outer glass sheet is such that its chemical composition comprises the following oxides in the weight content ranges defined below:

| | |
|---|---|
| $SiO_2$ | 75-85%, |
| $Al_2O_3$ | 2-3%, |
| $B_2O_3$ | 10-15%, |
| $Na_2O+K_2O$ | 3-7 %. |

8. The glazing as claimed in one of claims 1 to 6, **characterized in that** the outer glass sheet is such that its chemical composition comprises the following oxides in the weight content ranges defined below:

| | |
|---|---|
| $SiO_2$ | 55-71%, |
| $Al_2O_3$ | 2-15%, preferably 4-15% |
| $Na_2O$ | 9-18% |
| $MgO$ | 2-11% |
| $K_2O$ | 1-15% |
| $B_2O_3$ | 0-5%, |
| $CaO$ | 0-5% |
| $SnO_2$ | 0-5% |

9. The glazing as claimed in one of claims 1 to 8, **characterized in that** the inner glass sheet has a thickness of not more than 1.1 mm and preferentially less than 1 mm.

10. The glazing as claimed in the preceding claim, wherein the inner glass sheet has a thickness of 0.7 mm or less.

11. The glazing as claimed in one of the preceding claims, wherein the outer glass sheet is a non-reinforced glass sheet.

12. The glazing as claimed in one of the preceding claims, wherein the inner glass sheet is tinted.

13. The glazing as claimed in one of the preceding claims, wherein the thickness of the polymeric insert is between 50 $\mu$m and 4 mm.

14. The glazing as claimed in one of the preceding claims, **characterized in that** it constitutes a motor vehicle glazing, especially a windshield.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3558415 A
- GB 1339980 A
- WO 2012051038 A
- WO 2012177426 A
- EP 0448447 A
- WO 2004087590 A
- WO 02064519 A
- WO 2006072721 A
- GB 2078169 A
- EP 0914298 B